# EUROPÄISCHE PATENTSCHRIFT

(11) **EP 2 932 817 B1**
(45) Veröffentlichungstag und Bekanntmachung des Hinweises auf die Patenterteilung: **02.11.2016**
(21) Anmeldenummer: 15158689.8
(22) Anmeldetag: 11.03.2015
(51) Int. Cl.: A01B 45/02

(54) **BODENBEARBEITUNGSGERÄT**
SOIL CULTIVATION DEVICE
APPAREIL DE TRAITEMENT DES SOLS

(30) Priorität: 04.04.2014 DE 102014104876
(43) Veröffentlichungstag der Anmeldung: 21.10.2015
(73) Patentinhaber: Wiedenmann GmbH, 89192 Rammingen (DE)
(72) Erfinder:
(74) Vertreter: Kastel, Stefan

(56) Entgegenhaltungen:
- DE-A1-102004 018 101
- DE-B4-102005 021 025

## Beschreibung

Die Erfindung betrifft ein relativ zu dem Boden in einer Bewegungsrichtung bewegbares Bodenbearbeitungsgerät für die Tiefenlockerung von Böden mit den Merkmalen des Oberbegriffes des Anspruches 1, wie es aus der DE 10 2005 021 025 B4 bekannt ist.

Ein derartiges Bodenbearbeitungsgerät weist ein Gerätechassis oder einen Geräterahmen auf. Weiter ist eine Reihe von Tragarmen vorgesehen, die mit einem ersten Endbereich an dem Gerätechassis oder dem Geräterahmen derart angelenkt sind, dass sie um eine ortsfeste erste Schwenkachse auf- und abschwenkbar sind. Es ist eine Antriebseinrichtung, beispielsweise ein Kurbeltrieb, zum Antreiben der Auf- und Abbewegung der Tragarme vorgesehen. Pro Tragarm gibt es jeweils wenigstens eine Stechwerkzeuganlenkungseinrichtung, mit dem ein Stechwerkzeug an einem zweiten Endbereich des zugeordneten Tragarmes um eine zweite Schwenkachse schwenkbar angelenkt ist. Dies erfolgt derart, dass ein an der Stechwerkzeuganlenkungseinrichtung befestigtes Stechwerkzeug bei Abwärtsbewegen des zugeordneten Tragarmes in den Boden einstechbar ist. Fährt das Bodenbearbeitungsgerät dann in Bewegungsrichtung weiter, wird das eingestochene Werkzeug um die zweite Schwenkachse geschwenkt, so dass eine Tiefenlockerung des Bodens unterhalb der Bodenoberfläche erfolgt. Durch den weiteren Antrieb mittels der Antriebseinrichtung wird der Tragarm wieder angehoben und das Stechwerkzeug aus dem Boden herausgezogen, wobei dann das Stechwerkzeug wieder in seine Ruhelage geführt wird.

Um die Bodenbearbeitung besonders schnell und sicher gestalten zu können, ist bei der DE 10 2005 021 025 B4 vorgesehen, dass die Schwenkbewegung der Stechwerkzeuganlenkungseinrichtung um die zweite Schwenkachse mittels eines Getriebes auf eine Dämpfungseinrichtung zur Dämpfung übertragen wird. Gemäß Fig. 5 und Fig. 6 der DE 10 2005 021 025 B4 ist als Dämpfungseinrichtung ein sogenanntes "Rosta"-Element vorgesehen, welches ein an dem Geräterahmen befestigtes äußeres Gehäuse aufweist und eine an das Getriebe angeschlossene Vierkantwelle aufweist, die in das Gehäuse eingeführt ist. Zwischen dem im Inneren mit quadratischem Querschnitt versehenen Gehäuse und der im Querschnitt quadratischen Kontur der Vierkantwelle sind vier Körper aus elastomeren Material eingefügt, die erst bei Verdrehung der Vierkantwelle zwischen einer Kante der Vierkantwelle und einer Innenfläche des Gehäuses unter Druck gesetzt werden. Versuche haben gezeigt, dass es mit solchen Rosta-Elementen bei besonders schneller Arbeitsgeschwindigkeit schwierig wird, eine wirksame Dämpfung herbeizuführen.

Aufgabe der Erfindung ist es, ein Bodenbearbeitungsgerät der im Oberbegriff angegebenen und grundsätzlich aus der DE 10 2005 021 025 B4 bekannten Art derart zu verbessern, dass höhere Arbeitsgeschwindigkeiten bei gleichzeitig ruhigerem Lauf ermöglicht sind.

Zum Lösen dieser Aufgabe wird ein Bodenbearbeitungsgerät mit den Merkmalen des Anspruches 1 vorgeschlagen.

Vorteilhafte Ausgestaltungen der Erfindung sind Gegenstand der Unteransprüche.

Die Erfindung schafft ein relativ zu dem Boden in einer Bewegungsrichtung bewegbares Bodenbearbeitungsgerät für die Tiefenlockerung von Böden mit: einem Gerätechassis oder Geräterahmen, wenigstens einem Tragarm, der mit einem ersten Bereich an dem Gerätechassis oder Geräterahmen um eine zu dem Gerätechassis oder Geräterahmen ortsfeste erste Schwenkachse auf und ab schwenkbar angelenkt ist, einer Antriebseinrichtung zum Antreiben der Auf- und Abbewegung des wenigstens einen Tragarms, je wenigstens einer Stechwerkzeuganlenkungseinrichtung pro Tragarm, mittels der wenigstens ein Stechwerkzeug um eine zweite Schwenkachse relativ zu dem zugeordneten Tragarm schwenkbar an einem zweiten Bereich des Tragarmes derart anlenkbar ist, dass das Stechwerkzeug bei Abwärtsbewegung des Tragarmes in den Boden einstechbar ist und dass die Stechwerkzeuganlenkungseinrichtung zumindest bei eingestochenem Stechwerkzeug und Weiterbewegung des Bodenbearbeitungsgeräts in Bewegungsrichtung relativ zu dem Tragarm und zu dem Boden verschwenkt wird, so dass der Boden unterhalb der Bodenoberfläche gelockert werden kann, und wenigstens einem Getriebe, das zwischen die Stechwerkzeuganlenkungseinrichtung und einer Dämpfungseinrichtung geschaltet ist, um die Relativbewegung zwischen Stechwerkzeuganlenkungseinrichtung und zugeordnetem Tragarm zumindest teilweise zu dämpfen, wobei die Dämpfungseinrichtung einen elastomeren Körper aus elastomeren Material aufweist, der zwischen einem Halteelement zur Befestigung der Dämpfungseinrichtung und einem an das Getriebe angeschlossenes Eingangselement eingefügt ist, so dass sich das Halteelement und das Eingangselement bei Einleitung einer Bewegung durch das Getriebe unter Verformung des elastomeren Körpers zur Dämpfung bewegen können, dadurch gekennzeichnet,
a) dass eine ersten Seite des elastomeren Körpers auf einer Haltefläche des Haltelements flächig aufliegend fest mit dem Haltelement befestigt verbunden ist und dass eine der ersten Seite gegenüberliegender zweite Seite des elastomeren Körpers auf einer Haltefläche des Eingangselements flächig aufliegend fest mit dem Eingangselement befestigt verbunden ist,
   und/oder
b) dass der Körper aus elastomeren Materials mittels eines gesonderten gegen den Körper wirkenden Vorspannelements elastisch vorgespannt ist.

Vorzugsweise ist der elastomere Körper ein massiver Körper aus dem elastomeren Material.

Es ist bevorzugt, dass ein an einer ersten Seite des elastomeren Körpers angeordneter erster Oberflächenbereich des elastomeren Körpers relativ zu dem Halteelement fest und unbeweglich mit einer Haltefläche des Haltelements befestigt verbunden ist und dass ein an einer der ersten Seite gegenüberliegender zweiter Seite des elastomeren Körpers angeordneter zweiter Oberflächenbereich des elastomeren Körpers relativ zu dem Eingangselement fest und unbeweglich mit einer Haltefläche des Eingangselements befestigt verbunden ist.

Es ist bevorzugt, dass die Oberfläche der ersten Seite flächig anliegend an der Haltefläche des Halteelements haftend befestigt ist und dass die Oberfläche der zweiten Seite flächig an der Haltefläche des Eingangselement anliegend haftend befestigt ist.

Es ist bevorzugt, dass das Halteelement eine Halteplatte oder Halteschiene aufweist, dass das Eingangselement eine Eingangsplatte oder Eingangsschiene aufweist und dass der Körper zwischen der Halteplatte oder Halteschiene einerseits und zwischen der Eingangsplatte oder Eingangsschiene andererseits eingefügt ist.

Es ist bevorzugt, dass das Getriebe derart an das Eingangselement angeschlossen ist und das Halteelement derart befestigt ist, dass sich das Eingangselement und das Halteelement bei Verschwenken der Stechwerkzeuganlenkungseinrichtung um die zweite Schwenkachse relativ zueinander um eine durch den Körper verlaufende Drehachse verdrehen.

Es ist bevorzugt, dass die Drehachse zumindest mit einer Richtungskomponente parallel zu wenigstens einer der Halteflächen verläuft.

Es ist bevorzugt, dass die erste Seite vollflächig auf dem Halteelement aufliegt und vollflächig mit dem Halteelement verbunden ist. Es ist bevorzugt, dass die zweite Seite vollflächig auf dem Eingangselement aufliegt und vollflächig mit dem Eingangselement verbunden ist.

Es ist bevorzugt, dass das Halteelement ortsfest zu dem Gerätechassis oder dem Geräterahmen befestigt ist.

Es ist bevorzugt, dass der Körper quaderförmig ausgebildet ist.

Es ist bevorzugt, dass mehrere Stechwerkzeuganlenkungseinrichtungen vorgesehen sind, die mittels zugeordneter Getriebe an jeweils zugeordnete Eingangselemente einer gemeinsamen Dämpfungseinrichtung angeschlossen sind, wobei die Dämpfungseinrichtung ein gemeinsames Halteelement und einen oder mehrere gemeinsame elastomere Körper aufweist, über den oder die die mehreren Eingangselemente mit dem gemeinsamen Halteelement verbunden sind.

Es ist bevorzugt, dass das Getriebe eine Gestänge mit einer Steuerstange ist, die an der Stechwerkzeuganlenkungseinrichtung mit einem ersten Anlenkpunkt gelenkig angelenkt ist. Es ist bevorzugt, dass das Gestänge weiter als Umlenkelement einen Steuerhebel, der an einem zweiten Anlenkpunkt gelenkig an der Steuerstange angelenkt ist und an das Eingangselement angeschlossen ist oder als Eingangselement wirkt.

Es ist bevorzugt, dass der Steuerhebel mittels des elastomeren Körpers elastisch beweglich an dem Geräterahmen oder dem Gerätechassis befestigt ist. Es ist bevorzugt, dass das Halteelement eine an den Geräterahmen oder das Gerätechassis befestigte Steuerhebelbasis ist, die über den elastomeren Körper an dem Steuerhebel elastisch bewegbar und insbesondere elastisch um eine durch den elastomeren Körper verlaufende Drehachse drehbar befestigt ist.

Die Steuerstange ist bevorzugt einenends gelenkig mit der Stechwerkzeuganlenkungseinrichtung und anderenends gelenkig mit dem Steuerhebel verbunden. Der Steuerhebel weist bevorzugt einen ersten Arm auf, der zur gemeinsamen Bewegung fest mit dem Eingangselement verbunden ist oder das Eingangselement bildet.

Es ist bevorzugt, dass der Steuerhebel um die innerhalb des Körpers verlaufende Drehachse unter Verformung des Körpers drehbar ist.

Es ist bevorzugt, dass der Steuerhebel bei nichteingestochenenen Stechwerkzeug an einem Anschlag anliegt.

Es ist bevorzugt, dass der Steuerhebel einen zweiten Arm aufweist, der bei nichteingestochenenen Stechwerkzeug an dem Anschlag anliegt.

Es ist bevorzugt, dass der Anschlag verstellbar ist und/oder
dass der Anschlag als das Vorspannelement wirkt.

Es ist bevorzugt, dass eine Reihe von Tragarmen mit je wenigstens einer zugeordneten Stechwerkzeuganlenkeinrichtung und je wenigstens einer Steuerstange vorgesehen ist, wobei mehrere oder alle der Steuerstangen zentral zum Einstellen eines Einstechwinkels verstellbar sind.

Es ist bevorzugt, dass die wenigstens eine Steuerstange im Betrieb starr ist. Es ist bevorzugt, dass die wenigstens eine Steuerstange jedoch bei Nichtbetrieb zum Einstellen eines Einstechwinkels in der Länge einstellbar und festlegbar ist.

Um höhere Arbeitsgeschwindigkeiten zu erzielen, werden gemäß der Erfindung zwei Alternativlösungen vorgeschlagen, die alternativ oder auch kumuliert vorhanden sein können.

Gemäß einer ersten Alternative ist vorgesehen, dass ein Halteelement an einer ersten Seite des elastomeren Körpers fest und unbeweglich mit dem Körper verbunden ist und dass an der der ersten Seite gegenüberliegenden zweiten Seite des elastomeren Körpers ein Eingangselement fest und unbeweglich mit dem Körper verbunden ist.

Dies erfolgt bevorzugt derart, dass das Halteelement ausschließlich an der ersten Seite und das Eingangselement ausschließlich an der gegenüberliegenden zweiten Seite angreift. Weiter erfolgt dies bevorzugt derart, dass das Eingangselement ausschließlich über den Körper mit dem Halteelement verbunden ist und somit unter Verdrehung des Körpers um eine durch das elastomere Material des Körpers hindurch verlaufende Drehachse elastisch drehbar befestigt ist.

Bei den Rosta-Elementen aus dem Stand der Technik greifen elastomere Körper zunächst nur punktförmig (oder linienförmig) an und werden bei zunehmender Verdrehung der Vierkantwelle auf allen vier Seiten der Vierkantwelle immer weiter zusammengepresst. Hierdurch ergibt sich eine nicht-lineare, sehr steile Kennlinie; die Körper werden innerhalb kürzester Zeit sehr steif und bieten einen sehr hohen Widerstand. Es hat sich in der Praxis gezeigt, dass damit einerseits nur eine sehr schlechte Dämpfung erreichbar ist und dass dies dazu führt, dass die zurückgeführten Stechwerkzeuge beim Zurückführen zu viel schwingen und es zu lange dauert, bis die Stechwerkzeuge wieder in ihre Ruhelage überführt werden. Dies begrenzt die möglichen Transportgeschwindigkeiten und beeinflusst die Qualität der Lochausbildungen.

Bei der bevorzugten Ausgestaltung der Erfindung hingegen wird der Körper insgesamt in sich verdreht; hierdurch ergibt sich eine vorteilhafte Kennlinie, die sehr gut zur Dämpfung geeignet ist.

Alternativ wird vorgesehen, dass der Körper aus elastomeren Material mittels eines gesonderten, gegen den Körper wirkenden Vorspannelements elastisch vorgespannt ist.

Versuche mit dem Rosta-Element aus dem Stand der Technik haben gezeigt, dass es schwierig ist, eine Zurückführung der Stechwerkzeuge mit einem einfachen Rosta-Element herbeizuführen. Das Rosta-Element liefert in der Nulllage keine Rückstellkräfte auf die Eingangswelle, die Rückstellkräfte beginnen erst bei einer Verdrehung der Eingangswelle zu wirken und steigen dann sehr steil an. Dies bewirkt aber, dass gerade nah der Nulllage gar keine Rückstellkraft mehr wirkt, so dass die Stechwerkzeuge in der Nulllage kaum ruhig zu halten sind. Spannt man dagegen bereits das Rosta-Element vor, dann liegt die Ruhelage des Stechwerkzeugs außerhalb der Nulllage der Dämpfungseinrichtung und somit wirken auch bereits in der entsprechend vorgespannten Ruhelage durch ein Rosta-Element Rückstellkräfte; jede Verdrehung in die beiden Richtungen erfolgt gegen eine bereits wirkende Dämpfungskraft. Hierdurch ist eine verbesserte Dämpfung erreichbar, wodurch die Transportgeschwindigkeiten erhöht werden können.

Die Idee mit der Vorspannung verbessert 'somit bereits die Dämpfungswirkung bei Verwendung von bekannten Dämpfungseinrichtungen, wie z.B. Rosta-Elementen.

Besonders bevorzugt sind beide Ideen der elastischen Vorspannung einerseits und des (vorzugsweise voll-)flächigen Angriffes von Halteelement und Eingangselement auf gegenüberliegenden Seiten des elastomeren Körpers miteinander kombiniert.

Vorzugsweise ist - im Gegensatz zu dem Rosta-Element - pro Eingangselement nur ein einzelner Körper elastomeren Materials vorgesehen, wobei das Eingangselement nur an der zweiten Seite angreift und das Halteelement nur an der gegenüberliegenden ersten Seite befestigt ist.

Diese Idee wirkt auch bei Dämpfungseinrichtungen, die mit dem Tragarm auf- und abbewegt werden; es wäre somit denkbar, eine entsprechende Dämpfungseinrichtung auf dem Tragarm mitbewegend zu befestigen; eine derartige Ausbildung ist ausdrücklich mit umfasst.

Besonders bevorzugt ist die Dämpfungseinrichtung mit dem Halteelement, jedoch ortsfest zu dem Geräterahmen bzw. Gerätechassis befestigt, wobei das Getriebe in der aus der DE 10 2005 021 025 B4 bekannten Art dazu dient, die Schwenkbewegung des Stechwerkzeugs relativ zu der zweiten Schwenkachse aus dem bewegten System heraus in das unbewegte System zu überführen.

Es wird für nähere Einzelheiten zum möglichen Aufbau eines derartigen Getriebes ausdrücklich auf die DE 10 2005 021 025 B4 verwiesen.

Vorzugsweise ist demnach auch bei dem hier vorliegenden Bodenbearbeitungsgerät vorzusehen, ein Dämpfungs- und Anschlagselement außerhalb des bewegten Systems anzuordnen. Während jedoch bei der früheren Lösung gemäß der DE 10 2005 021 025 B4 ein Rosta-Element eingesetzt worden ist, welches eine Rechteckhülse mit Gummielementen aufweist, wobei innerhalb der Gummielemente ein Vierkant geführt ist, ist bei der bevorzugten Lösung ein Angriff zwischen Halteelement und Eingangselement lediglich an zwei gegenüberliegenden Seiten eines Körpers aus elastomeren Material vorgesehen.

Vorzugsweise werden zwei Metallleisten mit einem Gummikörper dazwischen eingesetzt. Vorzugsweise wird die als Halteelement wirkende eine Metallleiste am Rahmen oder am Chassis befestigt. Die als Eingangselement wirkende andere Metallleiste wird über einen Steuerhebel oder dergleichen auf eine Achse einer Steuerstange, welche Teil des Getriebes ist, geführt. Die Achse der Steuerstange befindet sich nahe der Schwenkachse des Tragarms. Die Lage der Achse zwischen Steuerhebel und Steuerstange lässt sich durch Verdrehung des Körpers aus elastomeren Materials um eine innerhalb des Körpers liegende gedachte Achse herum bewegen. Hierdurch kann die Schwenkbewegung des Stechwerkzeuges - beispielsweise eines Zinkens - aufgenommen werden. Diese Schwenkbewegung wird elastisch gedämpft. Daher braucht man keine gesonderten Federn mehr.

Insbesondere durch eine mögliche größere Masse und ein größeres Volumen des elastischen Materials, die bei dieser Lösung gegenüber z.B. Rosta-Elementen möglich ist, ergibt sich eine bessere Kraftübertragung. Insbesondere ergibt sich eine bessere Kraftübertragung, wenn die Kraft über eine größere Fläche von dem Körper auf das Halteelement und/oder auf das Eingangselement übertragen wird.

Aufgrund der verbesserten Kraftübertragung ergibt sich auch eine größere Dauerhaftigkeit.

Bei einer noch weiteren möglichen Lösung könnte zur Verbesserung der Dauerhaftigkeit die gesamte Dämpfungseinrichtung noch einmal in einer Gummimasse eingegossen sein.

Es gibt unterschiedliche mögliche Ausführungsformen. Bei einer Ausführungsform ist eine zentrale Halteplatte oder Halteleiste vorgesehen, auf der der Körper mit seiner ersten Seite befestigt ist. Auf der gegenüberliegenden zweiten Seite des Körpers sind dann mehrere Einzelplatten auf der anderen Seite vorgesehen, die als einzelne Eingangselemente an die den unterschiedlichen Tragarmen zugeordneten Getrieben angeschlossen werden können, so dass mehrere Werkzeugträger angeschlossen werden können.

Bei einer anderen Ausführungsform ist ein einzelnes Gummielement zwischen einer einzelnen Halteplatte und einer einzelnen Eingangsplatte vorgesehen.

Bei noch einer weiteren Ausgestaltung sind mehrere Gummipuffer als Körper vorgesehen. Eine Ausgestaltung dieser Ausführungsform mit mehreren Gummikörpern ist beispielsweise derart, dass zwischen einer Eingangsplatte oder Eingangsleiste und einer Halteplatte oder Halteleiste mehrere Gummikörper eingesetzt sind. Durch unterschiedliche Auswahl der Gummikörper - z.B. Volumen, Masse, Material, Shorehärte, Form - kann so eine ganz bestimmte Kennlinieneigenschaft der Dämpfungseinrichtung eingestellt werden.

Auch kann auf einer einzelnen Halteplatte eine Mehrzahl von Gummikörpern nebeneinander vorgesehen sein, wobei an einem oder mehreren dieser Gummikörper jeweils eine Eingangsplatte zum Anschließen einer Stechwerkzeuganlenkungseinrichtung vorgesehen sind.

Vorzugsweise ist als Körper eine Blockleiste aus elastomeren Material vorgesehen, die sich in Richtung der Drehachse länglich erstreckt. Alternativ ist eine Reihe von nebeneinander liegenden Körpern aus elastomeren Material vorgesehen, wobei sich die Reihe ebenfalls vorzugsweise in Richtung der Drehachse erstreckt.

Sind mehrere einzelne Platten als Eingangselemente vorgesehen, können auch gezielt elastische Elemente zwischen den Eingangsplatten eingefügt werden, um eine gegenseitige Stabilisierung zu schaffen. z.B. könnte noch zwischen zwei benachbarten Eingangselementen elastomeres Material eingefügt sein, das die benachbarten Eingangselemente aneinander elastisch koppelt. Auch mechanische Federn - Schraubenfederelemente, Blattfederelemente oder dergleichen - sind denkbar.

Vorteile besonderer Ausgestaltungen der Erfindung sind, dass man mit der neuen Dämpfungseinrichtung weitaus höherer Geschwindigkeiten fahren kann. Insbesondere ergibt sich, dass man mit der neuen Dämpfungseinrichtung eine größere Variation von möglichen Einstellungen hat. Man kann über die Auswahl der elastomeren Körper, insbesondere über die Materialauswahl - unterschiedliche Gummimischung - relativ viel Varianz erhalten. Durch die Verwendung elastomeren Materials ist eine starke Schwingungsdämpfung gegeben. All dies erhöht die Möglichkeiten gegenüber dem bekannten Rosta-Element. Bei einem Rosta-Element liegen die Gummielemente zunächst punktförmig auf, und durch eine größere Verdrehung erfolgt eine weitaus größere Rückstellkraft.

Bei der neu entwickelten Dämpfungseinrichtung liegen zwei Flächen auf. Weiter gibt es kein sich dem Verformungsweg des elastomeren Körpers entgegenstellendes Gehäuse. Insgesamt ist die Progressivität nicht so stark.

Alternativ oder zusätzlich hat man die Möglichkeit, das Gummielement vorzuspannen, um den Arbeitsbereich besser vorzugeben. Die Möglichkeit einer Vorspannung ist grundsätzlich zwar auch bei der Verwendung eines Rosta-Elementes interessant. Aufgrund der Progressivität bei einem Rosta-Element ergibt sich auch bei Einsatz einer gesonderten Vorspannung jedoch eher die Tendenz, dass das gestochene Loch sich in ein Langloch verformt. Bei Verwendung des von gegenüberliegenden Seiten gehandhabten ansonsten frei verbiegbaren Gummikörpers ergibt sich dagegen eher eine runde Lochform.

Ein weiterer Vorteil ist die verbesserte Geometrie von Eingangspunkt für das Getriebe und Halteelement. Bei einem Rosta-Element ist zwangsläufig der Eingangspunkt des Getriebes seitlich versetzt zu dem hülsenförmigen Halteelement. Hierdurch ergeben sich auch Probleme durch eingebrachte Drehmomente, die durch die seitliche Versetzung auftreten. Bei der Lösung mit dem Angriff an zwei unterschiedlichen gegenüberliegenden Seiten kann man den Gummikörper jedoch zentral belasten; es treten keine unerwünschten Drehmomente auf; und die Anordnung kann insgesamt kompakter gehalten werden. Somit ist die Geometrie vorteilhaft, hier kann auf einer Seite der Befestigung erfolgen und auf der anderen Seite der Angriff an das Getriebe. Hierdurch ergibt sich eine in Seitenrichtung gesehene kompaktere Bauweise. Insgesamt kann die Belastung besser auf das elastomere Material verteilt werden, so dass sich die Dauerhaftigkeit erhöht.

Es können auch mehrere Dämpfungseinrichtungen auf kleinerem Raum untergebracht werden. Auch kann das Vorspannelement einfach untergebracht werden. Auch kann eine Vorgabe und Positionierung eines Einstechwinkels auf kleinem Raum untergebracht werden.

Eine Vorspannung ist daher besonders vorteilhaft, da der Körper aus elastomeren Material in der Nullstellung keine Kraft aufbringt. Um die Nullstellung herum ergibt sich dann die Gefahr einer Vibration. Arbeitet man dagegen im vorgespannten Zustand, arbeitet man auf einer linearen oder im Wesentlichen lineare Kennlinie, so dass dort gute Dämpfungswirkungen vorgesehen sind.

Die Vorspannung kann über ein Vorspannelement erfolgen, das den Steuerhebel, der zwischen die Steuerstange und den Körper aus elastomeren Material eingesetzt ist, in einem bestimmten Winkel vorspannt. Hierzu kann beispielsweise ein Anschlag vorgesehen sein. In einer Ausführungsform ist der Anschlag an einem zweiten Arm eines als zweiarmiger Hebel ausgeführten Steuerhebels vorgesehen. Es ist natürlich auch denkbar, dass der Steuerhebel als einarmiger Hebel wirkt, wobei der Anschlag zwischen dem Körper aus elastomeren Material und dem Steuerstangengelenk wirkt.

Der Anschlag ist vorzugsweise einstellbar; über die Lageeinstellung des Anschlages ergibt sich die Einstellung der Vorspannung.

Vorzugsweise weist der Anschlag einen Puffer oder ein sonstiges elastisches Element auf, so dass eine elastische Vorspannung gegeben ist.

Ein weiterer Vorteil ist, dass sich durch die Dämpfungseinrichtung ein exzellenter Schutz gegen Rückwärtsfahren ergibt. Bei Rückwärtsfahren mit eingestochenen Werkzeugen wird ein langsamer Widerstand aufgebaut, der z.B. durch die Bedienperson leicht bemerkt werden kann, oder durch entsprechende Automatismen gehandhabt werden kann.

Es ist bevorzugt, dass das Halteelement und das Eingangselement lediglich über den Körper aus elastomeren Material miteinander verbunden sind. Dies erfolgt vorzugsweise derart, dass das Halteelement und das Eingangselement elastisch zueinander bewegbar sind.

Gegenüber Rosta-Elementen ergibt sich eine bessere Zentrierung und Kraftübertragung durch eine größere Basis des neuen Gummielements. Eventuell ist eine zentrale Dämpferschiene vorgesehen, an der nebeneinander mehrere einzelne Eingangselemente über wenigstens einem Körper aus elastomeren Material elastisch befestigt sind. Auch sind Einzelversionen mit zusätzlicher Gummi-Ummantelung möglich.

Mit bevorzugten Ausgestaltungen ist eine höhere Geschwindigkeit eines Kurbeltriebs als Antrieb möglich; eventuell kann sich je nach Ausführung in geringeren Geschwindigkeiten eine etwas unkontrolliertere Bewegung ergeben. Je nach Auswahl des GummiKörpers lassen sich unterschiedliche Charakteristiken erreichen, um das Bodenbearbeitungsgerät für den gewünschten Arbeitsgeschwindigkeitsbereich zu optimieren.

Zum Beispiel könnte das Bodenbearbeitungsgerät modular aufgebaut sein, wobei unterschiedliche Antriebssätze für unterschiedliche Größen oder Geschwindigkeiten erhältlich sind. Je nach Antriebssatz sind gegebenenfalls unterschiedliche Körper, z.B. mit unterschiedlichen Shorehärten oder unterschiedliche Feder-Dämpfungselemente einzusetzen.

Während beim Rosta-Element eine punktförmige Auflage zu Beginn herrscht und mit zunehmender Auslenkung eine zunehmende Progression zu verzeichnen ist (exponentieller Kraftanstieg), ergibt sich bei dem bevorzugten neuen Dämpfungselement eine eher lineare Kraft gleich zu Beginn.

Über die Gummielemente ist auch ein Rückfahrschutz gegeben.

Die veränderte Ausgestaltung der Dämpfungseinrichtung hat Auswirkungen auf das Lochbild der Stechwerkzeuge beim Einstechen im Boden; bei Verwendung von Rosta-Elementen ergibt sich eher ein Langloch, bei Verwendung von bevorzugten Ausgestaltungen von Dämpfungseinrichtungen sind die Löcher definierter und runder.

Das Gummielement ist vorzugsweise vorgespannt, um eine neutrale Stellung, in der keine resultierende Kraft des Gummielements vorhanden ist, im Betrieb zu vermeiden. Eine neutrale Stellung ohne Rückstellkraft könnte je nach Arbeitsgeschwindigkeit zu eher unerwünschten Bewegungen der Stechwerkzeuge in der Grundstellung führen, dies lässt sich durch Vorspannung vermeiden.

Gegebenenfalls ist eine Vorspannung mittels eines Anschlages vorzusehen; alternativ könnte auch das Halteelement in der Ruhestellung entsprechend mehr verschwenkt werden, so dass der Körper aus elastomeren Material bereits in der Ruhestellung unter Vorspannung steht. Vorzugsweise sind der Anschlag und/oder das Halteelement verstellbar ausgeführt.

Eine zentrale Winkelverstellung, mittels der gleichzeitig für mehrere Stechwerkzeuge ein Einstechwinkel einstellbar ist, könnte über eine gemeinsame zentrale Basis für alle Dämpfungseinrichtungen der jeweiligen Stechwerkzeugeinheiten erfolgen. Beispielsweise ist eine Halteleiste als gemeinsame Basis vorgesehen, die linear und/oder drehbar verstellbar ist.

Eine Einzeleinstellung des Einstechwinkels ist beispielsweise über eine Einstellung der Länge eines Getriebeelements, wie insbesondere einer Steuerstange, möglich. Vorzugsweise ist das Getriebe mit einer Steuerstange versehen, die zusammen mit der Stechwerkzeuganlenkungseinrichtung und dem Tragarm eine Parallelogrammführung bildet. Die geräteseitige Anlenkung der Steuerstange erfolgt elastisch durch Befestigung des Eingangselements mittels des Körpers aus elastomeren Materials an dem Halteelement, welches wiederum rahmenfest befestigbar ist.

Vorzugsweise ist das Bodenbearbeitungsgerät mit einer Gummischienen-Zinkensteuerung versehen. Hierdurch werden eine höhere Laufuhr und eine höhere Produktivität erreicht.

Es ist bevorzugt, dass ein an dem Tragarm (auch Schwinger genannt) drehbar angeordneter Zinkenträger (Beispiel für die Stechwerkzeuganlenkungseinrichtung) über eine parallelogrammartige, zum Schwinger angeordnete Steuerstange mit einem Steuerhebel verbunden ist, der vorgespannt, schwenkbar, elastisch und/oder schwingungsdämpfend am Geräterahmen gelagert ist.

Über die vorgespannte, schwenkbar, elastische und/oder schwingungsdämpfende Lagerung des Steuerhebels wird die Schwenkbewegung der Stechwerkzeuganlenkungseinrichtung relativ zu dem Tragarm gesteuert, positioniert und/oder zurückgestellt.

Der Steuerhebel ist vorzugsweise im elastischen Drehachsenbereich gelagert und vorgespannt.

Am Steuerhebel sind vorzugsweise ein oder mehrere Gummipuffer vorgesehen, die die Drehachse bilden. Anstelle eines Lagers erfolgt eine Lagerung über den Gummipuffer.

Am Steuerhebel ist beispielsweise eine Gummischiene mit breiter Basis vorgesehen, die die Drehachse bildet. Eine Gummischiene ist beispielsweise denkbar für einzelne oder einseitig verbundene Eingangselemente.

An der Basis für den Steuerhebel ist vorzugsweise ist weiterer einstellbarer elastischer Puffer vorgesehen, der den Steuerhebel vorspannt und einstellbar fixiert.

Die Steuerhebelbasis ist vorzugsweise am Geräterahmen starr oder verstellbar angeordnet.

Vorzugsweise sind zwei oder mehrere der Steuerhebel aller Stechwerkzeugeinheiten - z.B. aus einer Reihe von Tragarmen mit jeweiligen Stechwerkzeugeinheiten vorgesehen - zentral verstellbar.

Die Steuerstange ist wahlweise längenverstellbar.

Ausführungsbeispiele der Erfindung werden nachfolgend anhand der beigefügten Zeichnungen näher erläutert. Darin zeigt:
- Fig. 1: eine Seitenansicht der wesentlichsten Bauelemente einer Ausführungsform eines Bodenbearbeitungsgerätes zur Tiefenlockerung von Böden mit einem Teil eines Geräterahmens und mit Werkzeugeinheiten mit angetriebenen auf- und abbewegbaren Tragarmen und daran angelenkten Stechwerkzeuganlenkungeinrichtungen;
- Fig. 2: eine erste perspektivische Darstellung der wesentlichsten Bauteile des Geräts von Fig. 1;
- Fig. 3: eine zweite perspektivische Darstellung der wesentlichsten Bauteile des Geräts;
- Fig. 4: eine erste Ausführungsform einer Dämpfungseinrichtung für das Bodenbearbeitungsgerät; und
- Fig. 5: eine perspektivische Darstellung einer zweiten Ausführungsform einer Dämpfungseinrichtung für das Bodenbearbeitungsgerät.

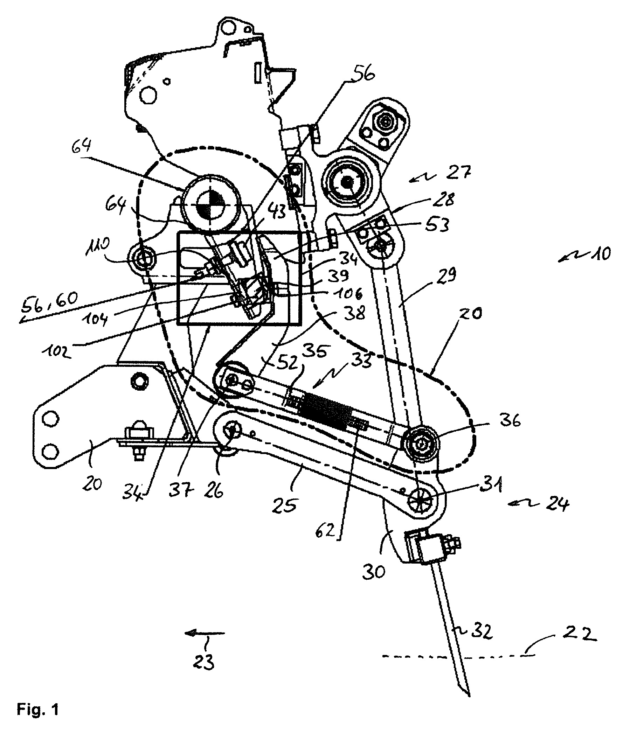

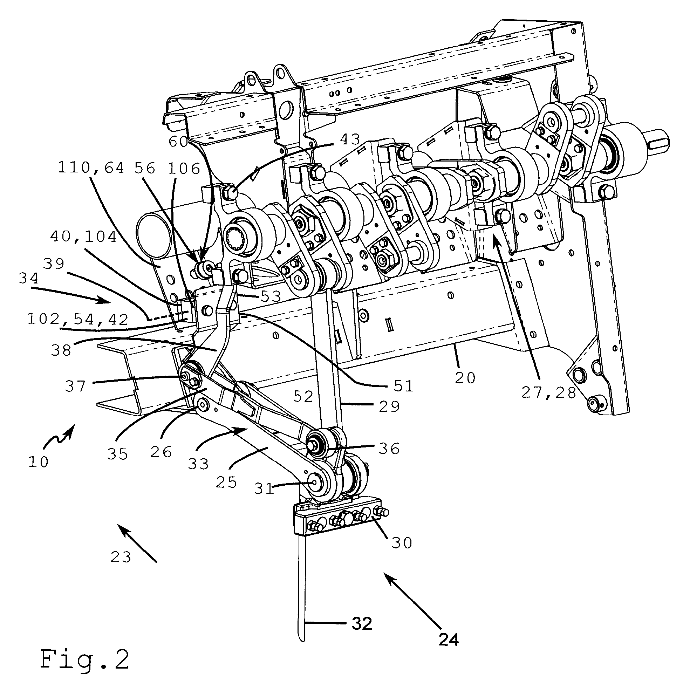

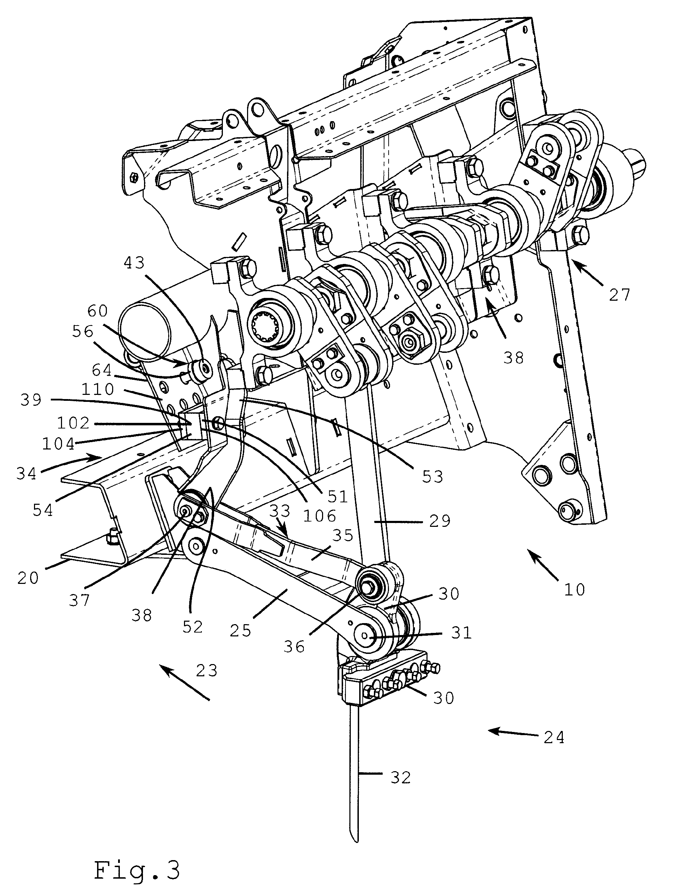

Die Figuren 1 bis 3 zeigen jeweils unterschiedliche Ansichten auf wesentliche Bauteile einer Ausführungsform eines Bodenbearbeitungsgerätes 10 für die Tiefenlockerung von Böden. Dabei sind weitere typische Bauteile solcher Geräte, die gut im Stand der Technik - siehe zum Beispiel die in der Beschreibungseinleitung der DE 10 2005 021 025 B4 erwähnten Druckschriften - bekannt sind, der besseren Übersichtlichkeit wegen weggelassen. In der Regel haben die hier in Rede stehenden Bodenbearbeitungsgeräte eine Mehrzahl von Werkzeugeinheiten, die quer zur Fahrtrichtung am Bodenbearbeitungsgerät 10 verteilt angeordnet sind. Eine perspektivische Ansicht einer solchen Verteilung ist beispielsweise in der deutschen Patentanmeldung DE 10 2004 018 101 A1 wiedergegeben, auf die für weitere Einzelheiten der in Rede stehenden Bodenbearbeitungsgeräte ausdrücklich verwiesen wird. Für weitere Einzelheiten wird außerdem auf die DE 10 2005 021 025 B4 und die darin zitierten Dokumente verwiesen.

Das Bodenbearbeitungsgerät 10 hat einen Geräterahmen 20, der mittels Rollen (nicht dargestellt) über den Boden 22 in einer Bewegungsrichtung 23 verfahrbar ist.

Es sind mehrere identisch ausgebildete Werkzeugeinheiten 24 in Richtung in die Darstellungsebene von Fig. 1 hinein nebeneinander vorgesehen, von denen in den Figuren jeweils nur eine dargestellt ist. Jede Werkzeugeinheit 24 hat eine Schwinge oder einen Tragarm 25 - dies kann zum Beispiel eine Stange sein, bevorzugt ist jedoch jeder Tragarm 25 durch mehrere aneinander gekoppelte, zum Beispiel aneinander geschweißte parallele Stangen gebildet. Der Tragarm 25 ist an einem Ende um eine erste Schwenkachse 26 schwenkbar mittelbar oder unmittelbar an dem Geräterahmen 20 derart angelenkt, dass die erste Schwenkachse 26 orststabil zum Geräterahmen 20 ist.

An dem Tragarm 25 greift eine Antriebseinrichtung 27 mit einem Kurbeltrieb 28 und einer Antriebsstange 29 an, die den Tragarm 25 um die erste Schwenkachse 26 auf und ab schwenkend antreibt. Am freien Ende des Tragarmes 25 ist eine Stechwerkzeuganlenkungseinrichtung in Form eines Werkzeughalters 30 relativ zu dem Tragarm 25 um eine zweite Schwenkachse 31 schwenkbar angelenkt. Demnach bewegt sich die zweite Schwenkachse 31 und der Werkzeughalter 30 mit dem Tragarm 25 auf und ab. An dem Werkzeughalter 30 ist ein Stechwerkzeug 32 zum Einstechen in dem Boden 22 fest, jedoch auswechselbar, befestigt.

Bei dem dargestellten Ausführungsbeispiel des Bodenbearbeitungsgeräts 10 ist ein Getriebe, hier in Form eines ersten Gestänges 33, vorgesehen, das eine relative Verschwenkung von Tragarm 25 und Werkzeughalter 30 in den Nahbereich der ersten Schwenkachse 26 zum dortigen Abgriff durch eine ruhend zu dem Geräterahmen 20 angeordnete Dämpfungseinrichtung 34 führt. Das Gestänge 33 weist jeweils ein starres Stangenelement, hier in Form einer etwa geraden im Betrieb starren, das heißt hier insbesondere im Betrieb nicht längenveränderlichen, Steuerstange 35 mit einem ersten Anlenkpunkt 36 und einem davon in Längsrichtung der Steuerstange 35 entfernten zweiten Anlenkpunkt 37 auf.

Die Steuerstange 35 ist mit ihrem an einem Ende befindlichen ersten Anlenkpunkt 36 fest, aber verschwenkbar an den Werkzeughalter 30 angelenkt. Die durch den ersten Anlenkpunkt 36 (in die Zeichenebene hinein) laufende Verschwenkachse, um die die Steuerstange 35 zu dem Werkzeughalter 30 verschwenken kann, liegt mit Abstand parallel zu der zweiten Schwenkachse 31. Die Steuerstange 35 verläuft etwa parallel zu dem Tragarm 25, und der Abstand der Anlenkpunkte 36, 37 entspricht in etwa dem Abstand der ersten Schwenkachse 26 und der zweiten Schwenkachse 31. Damit liegt der zweite Anlenkpunkt 37 relativ zu der ersten Schwenkachse 26 entsprechend 10 wie der erste Anlenkpunkt 36 relativ zu der zweiten Schwenkachse 31. Mit anderen Worten bilden die Anlenkpunkte 36, 37 und die erste und die zweite Schwenkachse 26, 31zumindest näherungsweise ein Parallelogramm.

Bei dem gezeigten Ausführungsbeispiel des Bodenbearbeitungsgeräts 10 umfasst das durch das erste Gestänge 33 gebildete Getriebe weiter noch einen Steuerhebel 38, der um eine Drehachse 39 drehbar an dem Gerätechassis 20 gelagert ist. Der Steuerhebel 38 greift hierzu an der Dämpfungseinrichtung 38 an.

Dadurch ist bei der dargestellten Ausführungsform eines Bodenbearbeitungsgeräts 10 der Steuerhebel 38 elastisch schwenkend gelagert. Der Steuerhebel 38 ist über ein Elastomer 54 schwenkend mit dem Geräterahmen 20 verbunden. Das Elastomer 54 hält den Steuerhebel 38 bei nicht eingestochenem Stechwerkzeug 32 in der Ruhelage und lässt den Steuerhebel 38 nach beiden Seiten hin in gewissem Maße um die dritte Schwenkachse 39 verschwenken. Dies geschieht beispielsweise bei jeder im Einstechbetrieb auftretenden Verschwenkung des Werkzeughalters 30 um die zweite Schwenkachse 31. Bei Freigabe des Stechwerkzeuges 32 zieht das Elastomer 54 das Umlenkelement 38 und damit den Werkzeughalter 30 wieder in die Ruhelage zurück.

Dies wird über die Dämpfungseinrichtung 38 bewirkt. Die Dämpfungseinrichtung 38 weist einen elastomeren Körper 102 aus Elastomer 54 auf, wobei der Körper 102 zwischen einem Halteelement 104 und einem Eingangselement 106 eingefügt ist, so dass das Halteelement 104 ausschließlich über den Körper 102 mit dem Eingangselement 106 verbunden ist.

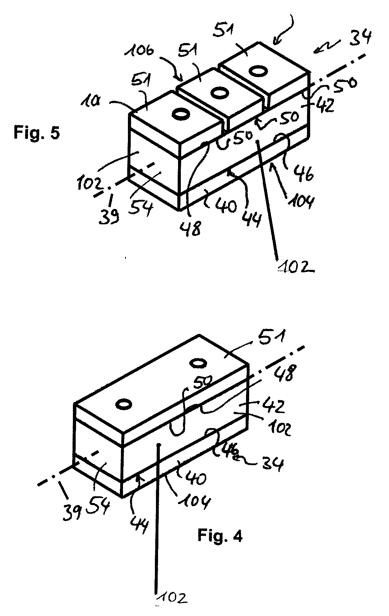

Ausführungsbeispiele der Dämpfungseinrichtung 38 sind näher in den Fig. 4 und 5 dargestellt. Demnach ist das Halteelement 104 ist beispielsweise eine Halteplatte 40 oder eine Halteschiene.

Der Körper 102 ist insbesondere ein länglicher quaderförmiger Block 42 aus massivem Elastomer 54.

Eine erste Seite 44 des Körpers 102 ist vollflächig mit einer Haltefläche 46 des Haltelements 104 haftend verbunden, insbesondere anvulkanisiert oder verklebt.

An der gegenüberliegenden zweiten Seite 48 des Körpers 102 ist eine Haltefläche 50 des Eingangselements 106 vollflächig mit zumindest einem Bereich der zweiten Seite 48 haftend verbunden, z.B. anvulkanisiert oder verklebt. Die verbleibenden Seiten des Körpers 102 liegen frei, so dass sich der Körper 102 zu diesen Seiten hin verformen kann. Durch eine längliche Form lässt sich eine bevorzugte Verformungsrichtung um die das Elastomer 54 des Körpers 102 verlaufende gedachte Drehachse 39 vorgeben. Demnach verläuft die Drehachse 39 in Längsrichtung des Blocks 42.

Der Körper 102 kann z.B. durch eine Gummileiste gebildet sein, dann verläuft die Drehachse 39 in Längsrichtung der Gummileiste. In einer nicht dargestellten Ausgestaltung ist eine Reihe von nebeneinander angeordneten Gummieinzelkörpern oder Einzelblöcken vorgesehen. Die Drehachse 39 verläuft dann vorzugsweise in Längsrichtung der Reihe.

Die beiden in den Fig. 4 und 5 dargestellten Ausführungsformen unterscheiden sich durch die Anordnung des Eingangselements 106. Während bei der in Fig. 4 dargestellten ersten Ausführungsform nur ein einzelnes, als Leiste oder Eingangsplatte 51 ausgebildetes Eingangselement 106 vorgesehen ist, sind bei der in Fig. 5 dargestellten weiteren Ausführungsform mehrere plattenfömige Eingangselemente 106 nebeneinander auf einem als Gummileiste ausgebildeten elastomeren Körper 102 befestigt und auch im bestimmten Maße relativ zueinander bewegbar. An die mehreren Eingangselemente 106 können mehrere Gestänge 33, z.B. diejenigen benachbarter Werkzeugeinheiten 24 angeschlossen werden.

Das Eingangselement 106 ist, wie dies in den Fig. 1 bis 3 dargestellt ist, insbesondere Teil des Steuerhebels 38. Der Steuerhebel 38 ist in den dargestellten Ausführungsbeispielen als zweiarmiger Hebel ausgebildet, wobei ein erster Arm 52 im zweiten Anlenkpunkt 37 an die Steuerstange 35 angelenkt ist. Ein zweiter Arm 53 wirkt mit einem Anschlag 56 zusammen, der in seiner Lage einstellbar ist und an seiner Anschlagfläche mit einem elastischen Puffer 43 versehen ist.

Im mittleren Bereich zwischen den Armen 52, 53 ist der Steuerhebel 38 mit einem das Eingangselement 106 bildenden plattenförmigen Bereich versehen oder an dem als Eingangsplatte 51 ausgebildeten Eingangselement 106 fest befestigt. Ein Verdrehen des Steuerhebels 38 erfolgt unter Verformung des elastomeren Körpers 102 um die Drehachse 39.

Der die Ruhelage definierende Anschlag 56 ist so eingestellt, dass er den elastomeren Körper 102 aus seiner Nulllage heraus bereits in eine Verformungsrichtung hinein vorspannt. Somit wirkt bereits in der Nulllage eine elastische Rückstellkraft. Der Anschlag 56 mit dem Puffer 43 und dem zweiten Arm 53 bilden somit eine Vorspanneinrichtung 60 zum elastischen Vorspannen der Dämpfungseinrichtung 34. Selbstverständlich sind auch andere Vorspanneinrichtungen 60 denkbar. Z.B. kann der Steuerhebel 38 auch als einarmiger Hebel ausgebildet sein, der Anschlag würde dann an dem ersten Arm 52 angreifen.

Der Steuerhebel 38 ist demnach über den Körper 102 elastisch mit dem Halteelement 104 verbunden. Das Halteelement 104 ist vorzugsweise an dem Geräterahmen 20 befestigt. Das Halteelement 104 dient somit auch als Steuerhebelbasis 110 eines elastisch gelagerten Steuerhebels 38.

Bei der in Fig. 4 dargestellten ersten Ausführungsform der Dämpfungseinrichtung 38 ist das Halteelement 104 als Steuerhebelbasis 110 in Form einer länglichen Platte oder Schiene ausgebildet, die - z.B. in der Lage oder Ausrichtung einstellbar - am Geräterahmen 20 gehalten ist. Der Steuerhebel 108 weist als Eingangselement 106 eine plattenartige Basis auf, deren Haltefläche z.B. durch Kleben fest mit dem Körper 102 verbunden ist.

Somit ist auf der ersten Seite 44 des Körpers 102 das Halteelement 104 flächig mit einer Haltefläche 46 befestigt; und auf der gegenüberliegenden zweiten Seite 48 des Körpers 102 ist das Eingangselement 106 mit seiner Haltefläche 50 anhaftend befestigt. Der Steuerhebel 108 ist durch diese Anbindung zu dem Geräterahmen 20 um eine Drehachse 39 drehbar, die innerhalb des Körpers 102 verläuft. Durch die Verdrehung des Steuerhebels 108 um diese Drehachse 116 unter elastischer Verformung des Körpers 102 wird der zweite Anlenkpunkt 37 elastisch gedämpft verstellt.

Eine Einstellung der Einstechwinkel lässt sich z.B. durch Einstellung des Anschlags 56 oder durch eine zentrale Verstellung einer Basis 64, auf der das Halteelement befestigt ist, bewirken. Alternativ oder zusätzlich kann eine Längeneinstelleinrichtung 62 zum Einstellen und Festlegen einer Länge der Steuerstange 35 vorgesehen sein.

Einige interessante Aspekte werden im Folgenden noch einmal zusammengefasst: Die Erfindung betrifft ein Relativ zu dem Boden in einer Bewegungsrichtung bewegbares Bodenbearbeitungsgerät (10) für die Tiefenlockerung von Böden mit: an auf und ab bewegbaren Tragarmen (25) geführten Stechwerkzeugen (32) und einer einen elastomeren Körper (102) aufweisenden Dämpfungseinrichtung (34) zum Dämpfen einer Rückführbewegung der im Verlauf eines Herausziehens aus dem Boden sich relativ zu dem Tragarm verschwenkenden Stechwerkzeuge (32). Um einen ruhigeren und schnelleren Arbeitsbetrieb zu ermöglichen, wird vorgeschlagen, dass eine ersten Seite (44) des elastomeren Körpers (102) auf einer Haltefläche (46) eines Haltelements (104) flächig aufliegend fest mit dem Haltelement (104) befestigt verbunden ist und dass eine der ersten Seite (44) gegenüberliegender zweite Seite (48) des elastomeren Körpers (102) auf einer Haltefläche (50) eines Eingangselements (106) flächig aufliegend fest mit dem Eingangselement (106) befestigt verbunden ist,
und/oder
b) dass der Körper (102) aus elastomeren Materials mittels einer gesonderten gegen den Körper wirkenden Vorspanneinrichtung (60) elastisch vorgespannt ist.

### Bezugszeichenliste:

- 10: Bodenbearbeitungsgerät (zehnte Ausführungsform)
- 20: Geräterahmen
- 22: Boden
- 23: Bewegungsrichtung
- 24: Werkzeugeinheit
- 25: Tragarm
- 26: erste Schwenkachse
- 27: Antriebseinrichtung
- 28: Kurbeltrieb
- 29: Antriebsstange
- 30: Werkzeughalter (Stechwerkzeuganlenkungseinrichtung)
- 31: zweite Schwenkachse
- 32: Stechwerkzeug
- 33: Gestänge (Getriebe)
- 34: Dämpfungseinrichtung
- 35: Steuerstange
- 36: erster Anlenkpunkt
- 37: zweiter Anlenkpunkt
- 38: Steuerhebel
- 39: Drehachse
- 40: Halteplatte
- 42: Block
- 43: Puffer
- 44: erste Seite
- 46: Haltefläche (Halteelement)
- 48: zweite Seite
- 50: Haltefläche (Eingangselement)
- 51: Eingangsplatte
- 52: erster Arm
- 53: zweiter Arm
- 54: Elastomer
- 56: Anschlag
- 60: Vorspanneinrichtung
- 62: Längeneinstelleinrichtung
- 64: verstellbare Basis (zentrale Einsteckwinkelverstellung)
- 102: Körper
- 104: Haltelement
- 106: Eingangselement
- 110: Steuerhebelbasis

## Patentansprüche

1. Relativ zu dem Boden in einer Bewegungsrichtung bewegbares Bodenbearbeitungsgerät (10) für die Tiefenlockerung von Böden mit:
einem Gerätechassis oder Geräterahmen (20),
wenigstens einem Tragarm (25), der mit einem ersten Bereich an dem Gerätechassis oder Geräterahmen (20) um eine zu dem Gerätechassis oder Geräterahmen (20) ortsfeste erste Schwenkachse (26) auf und ab schwenkbar angelenkt ist,
einer Antriebseinrichtung (27) zum Antreiben der Auf- und Abbewegung des wenigstens einen Tragarms (25),
je wenigstens einer Stechwerkzeuganlenkungseinrichtung (30) pro Tragarm (25),
mittels der wenigstens ein Stechwerkzeug (32) um eine zweite Schwenkachse (31) relativ zu dem zugeordneten Tragarm (25) schwenkbar an einem zweiten Bereich des Tragarmes (25) derart anlenkbar ist, dass das Stechwerkzeug (32) bei Abwärtsbewegung des Tragarmes (25) in den Boden (22) einstechbar ist und dass die Stechwerkzeuganlenkungseinrichtung (30) zumindest bei eingestochenem Stechwerkzeug (32) und Weiterbewegung des Bodenbearbeitungsgeräts (10) in Bewegungsrichtung (23) relativ zu dem Tragarm (23) und zu dem Boden (22) verschwenkt wird, so dass der Boden (22) unterhalb der Bodenoberfläche gelockert werden kann, und wenigstens einem Getriebe (33), das zwischen die Stechwerkzeuganlenkungseinrichtung (20) und einer Dämpfungseinrichtung (38) geschaltet ist, um die Relativbewegung zwischen Stechwerkzeuganlenkungseinrichtung (30) und zugeordnetem Tragarm (25) zumindest teilweise zu dämpfen,
wobei die Dämpfungseinrichtung (38) einen Körper (102) aus elastomeren Material aufweist, der zwischen einem Halteelement (104) zur Befestigung der Dämpfungseinrichtung (38) und einem an das Getriebe (33) angeschlossenem Eingangselement (106) eingefügt ist, so dass sich das Halteelement (104) und das Eingangselement (106) bei Einleitung einer Bewegung durch das Getriebe (33) unter Verformung des elastomeren Körpers (102) zur Dämpfung bewegen können, **dadurch gekennzeichnet,**
a) **dass** eine ersten Seite (44) des elastomeren Körpers (102) auf einer Haltefläche (46) des Haltelements (104) flächig aufliegend fest mit dem Haltelement (104) befestigt verbunden ist und dass eine der ersten Seite (44) gegenüberliegender zweite Seite (48) des elastomeren Körpers (102) auf einer Haltefläche (50) des Eingangselements (106) flächig aufliegend fest mit dem Eingangselement (106) befestigt verbunden ist,
und/oder
b) **dass** der Körper (102) aus elastomeren Materials mittels einer gesonderten gegen den Körper wirkenden Vorspanneinrichtung (60) elastisch vorgespannt ist.

2. Bodenbearbeitungsgerät (10) nach Anspruch 1,
**dadurch gekennzeichnet**,
a1) dass der elastomere Körper (102) ein massiver Block (42) aus dem elastomeren Material (54) ist und/oder
a2) dass ein an der ersten Seite (44) des elastomeren Körpers (102) angeordneter erster Oberflächenbereich des elastomeren Körpers (102) relativ zu dem Halteelement (104) fest und unbeweglich mit einer Haltefläche (46) des Haltelements (104) befestigt verbunden ist und dass ein an der der ersten Seite (44) gegenüberliegenden zweiten Seite (48) des elastomeren Körpers (102) angeordneter zweiter Oberflächenbereich des elastomeren Körpers (102) relativ zu dem Eingangselement (106) fest und unbeweglich mit einer Haltefläche (50) des Eingangselements (106) befestigt verbunden ist.

3. Bodenbearbeitungsgerät (10) nach einem der voranstehenden Ansprüche, **dadurch gekennzeichnet,**
**dass** die Oberfläche der ersten Seite (44) flächig anliegend an der Haltefläche des Halteelements (104) haftend befestigt ist und dass die Oberfläche der zweiten Seite (48) flächig an der Haltefläche des Eingangselement (106) anliegend haftend befestigt ist.

4. Bodenbearbeitungsgerät (10) nach einem der voranstehenden Ansprüche, **dadurch gekennzeichnet,**
**dass** das Halteelement (104) eine Halteplatte (40) oder Halteschiene aufweist, dass das Eingangselement (106) eine Eingangsplatte (51) oder Eingangsschiene aufweist und dass der Körper (102) zwischen der Halteplatte (40) oder Halteschiene einerseits und zwischen der Eingangsplatte (51) oder Eingangsschiene andererseits eingefügt ist und die Halteplatte (40) oder Halteschiene mittels des elastomeren Körpers (102) an der Eingangsplatte (51) oder Eingangsschiene befestigt ist.

5. Bodenbearbeitungsgerät (10) nach einem der voranstehenden Ansprüche, **dadurch gekennzeichnet,**
**dass** das Getriebe (33) derart an das Eingangselement (106) angeschlossen ist und das Halteelement (104) derart befestigt ist, dass sich das Eingangselement (106) und das Halteelement (104) bei Verschwenken der Stechwerkzeuganlenkungseinrichtung (30) um die zweite Schwenkachse (31) relativ zueinander um eine durch den Körper (102) verlaufende Drehachse (39) verdrehen.

6. Bodenbearbeitungsgerät (10) nach Anspruch 5,
**dadurch gekennzeichnet**,
6.1 dass die Drehachse (39) zumindest mit einer Richtungskomponente parallel zu wenigstens einer der Halteflächen (46, 50) verläuft und/oder
6.2 dass der Körper (102) mit denjenigen verbleibenden Seiten, die sich zumindest mit einer Richtungskompenente parallel zu der Drehachse (39) erstrecken, frei liegt und an diesen Seitenbereichen nicht seitlich abgestützt ist.

7. Bodenbearbeitungsgerät (10) nach einem der voranstehenden Ansprüche, **dadurch gekennzeichnet**,
a7.1) dass die erste Seite (44) vollflächig auf dem Halteelement (104) aufliegt und vollflächig mit dem Halteelement (104) verbunden ist und/oder
a7.2) dass die zweite Seite (48) vollflächig auf dem Eingangselement (106) aufliegt und vollflächig mit dem Eingangselement (106) verbunden ist und/oder
a7.3) dass wenigstens eine oder beide der Halteflächen (46, 50) vollflächig mit der zugeordneten Seite (44, 48) des Körpers (102) verbunden ist bzw. sind.

8. Bodenbearbeitungsgerät (10) nach einem der voranstehenden Ansprüche, **dadurch gekennzeichnet**,
8.1 dass das Halteelement (104) ortsfest zu dem Gerätechassis oder dem Geräterahmen (20) befestigt ist und/oder
8.2 dass der Körper (102) quaderförmig ausgebildet ist.

9. Bodenbearbeitungsgerät (10) nach einem der voranstehenden Ansprüche, **dadurch gekennzeichnet,**
**dass** mehrere Stechwerkzeuganlenkungseinrichtungen (30) vorgesehen sind, die mittels zugeordneter Getriebe (33) an jeweils zugeordnete Eingangselemente (106) einer gemeinsamen Dämpfungseinrichtung (38) angeschlossen sind, wobei die Dämpfungseinrichtung (38) ein gemeinsames Halteelement (104) und einen oder mehrere gemeinsame elastomere Körper (102) aufweist, über den oder die die mehreren Eingangselemente (106) mit dem gemeinsamen Halteelement (104) verbunden sind.

10. Bodenbearbeitungsgerät (10) nach einem der voranstehenden Ansprüche, **dadurch gekennzeichnet,**
**dass** das Getriebe eine Gestänge (33) mit einer Steuerstange (35)ist, die an der Stechwerkzeuganlenkungseinrichtung (30) mit einem ersten Anlenkpunkt (36) gelenkig angelenkt ist.

11. Bodenbearbeitungsgerät (10) nach Anspruch 10,
**dadurch gekennzeichnet,**
**dass** das Gestänge (33) weiter einen Steuerhebel (38) aufweist, der an einem zweiten Anlenkpunkt (37) gelenkig an der Steuerstange (35) angelenkt ist und an das Eingangselement (106) angeschlossen ist oder als Eingangselement (106) wirkt.

12. Bodenbearbeitungsgerät (10) nach Anspruch 11,
**dadurch gekennzeichnet**,
12.1 dass der Steuerhebel (38) mittels des elastomeren Körpers (102) elastisch beweglich an dem Geräterahmen (20) oder dem Gerätechassis befestigt ist und/oder
12.2 dass das Halteelement (104) eine an den Geräterahmen (20) oder das Gerätechassis befestigte Steuerhebelbasis (110) ist, die über den elastomeren Körper (102) an dem Steuerhebel (38) elastisch bewegbar und/oder elastisch um eine durch den elastomeren Körper (102) verlaufende Drehachse (39) drehbar befestigt ist.

13. Bodenbearbeitungsgerät (10) nach einem der Ansprüche 11 oder 12, **dadurch gekennzeichnet**,
13.1 dass der Steuerhebel (38) einen ersten Arm (52) aufweist, der zur gemeinsamen Bewegung fest mit dem Eingangselement (106) verbunden ist oder das Eingangselement (106) bildet und/oder
13.2 dass der Steuerhebel (38) um die innerhalb des Körpers (102) verlaufende Drehachse (39) unter Verformung des Körpers (102) drehbar ist und/oder 13.3 dass der Steuerhebel (38) bei nichteingestochenenen Stechwerkzeug (32) an einem Anschlag (56) anliegt und/oder
13.4 dass der Steuerhebel (38) einen zweiten Arm (53) aufweist, der bei nichteingestochenenen Stechwerkzeug (32) an dem Anschlag (56) anliegt und/oder
13.5 dass der Anschlag (56) verstellbar ist und/oder
13.6 dass der Anschlag (56) als Vorspanneinrichtung oder als Teil der Vorspanneinrichtung (60) wirkt.

14. Bodenbearbeitungsgerät (10) nach einem der voranstehenden Ansprüche, **dadurch gekennzeichnet**,
14.1 dass eine Reihe von Tragarmen (25) mit je wenigstens einer zugeordneten Stechwerkzeuganlenkeinrichtung (30) und je wenigstens einer Steuerstange (35) vorgesehen ist, wobei mehrere oder alle der Steuerstangen (35) zentral zum Einstellen eines Einstechwinkels verstellbar sind und/oder
14.2 dass die wenigstens eine Steuerstange (35) im Betrieb starr ist und/oder
14.3 dass die wenigstens eine Steuerstange (35) eine Längeneinstelleinrichtung (62) aufweist, mittels der die Steuerstange (35) bei Nichtbetrieb zum Einstellen eines Einstechwinkels in der Länge einstellbar und festlegbar ist.

## Claims

1. Soil cultivation device (10) for depth loosening of soils which is movable in a moving direction relative to the soil, the device comprising:
a device chassis or device frame (20),
at least one supporting arm (25) articulated with a first portion thereof to the device chassis or device frame (20) so as to be pivotable up and down about a pivot axis (26) stationary with respect to the device chassis or device frame (20),
a driving device (27) for driving the up and down movement of the at least one supporting arm (25),
at least one piercing tool articulation device (30) for each supporting arm (25) by means of which at least one piercing tool (32) can be articulated in a manner pivotable about a second pivot axis (31) relative to the associated supporting arm (25) to a second portion of the supporting arm (25) in such a way that the piercing tool can be inserted into the soil (22) during the downward movement of the supporting arm (25), and that the piercing tool articulation device (30) is pivoted relative to the supporting arm (23) and to the soil (22) at least while the piercing tool (32) is being inserted and the soil cultivation device (10) is moved on in the moving direction so that the soil beneath the ground surface can be loosened, and
at least one transmission mechanism (33) connected between the piercing tool articulation device (20) and a damper device (38) for damping the relative movement between the piercing tool articulation device (30) and the associated supporting arm (25) at least partially,
wherein the damper device (38) comprises a body (102) of an elastomeric material that is interposed between a holding element (104) for fixing the damper device (38) and an input element (106) connected to the transmission mechanism (33) so that on the initiation of a movement by said transmission mechanism (33), the holding element (104) and the input element (106) can move for damping under deformation of the elastomeric body (102),
**characterized in that**
a) a first side (44) of the elastomeric body (102) is fixedly connected to the holding element (104) while being flatly supported on a holding surface (46) of the holding element (104), and that a second side (48) of the elastomeric body (102) opposite the first side (44) is fixedly connected to the input element (106) while being flatly supported on a holding surface (50) of the input element (106),
and/or
b) that the body (102) of elastomeric material is elastically biased by means of a separate biasing device (60) acting against said body.

2. Soil cultivation device (10) according to claim 1,
**characterized in that**
a1) the elastomeric body (102) is a solid block (54) of said elastomeric material (54) and/or that
a2) a first surface region of the elastomeric body (102) arranged on the first side (44) of the elastomeric body (102) is fixedly connected to a holding surface (46) of the holding element (104) in a manner such as to be fixed and immovable relative to said holding element (104), and that a second surface region of the elastomeric body (102) arranged on a second side (48) of the elastomeric body (102) opposite to the first side (44) is fixedly connected to a holding surface (50) of the input element (106) in a manner such as to be fixed and immovable relative to said input element (106).

3. Soil cultivation device (10) according to any one of the preceding claims, **characterized in that** the surface of the first side (44) is adhesively fixed to the holding surface of the holding element (104) while resting flat against said holding surface, and that the surface of the second side (48) is adhesively fixed while resting flat against the holding surface of the input element (106).

4. Soil cultivation device (10) according to any one of the preceding claims, **characterized in that**
the holding element (104) comprises a holding plate (40) or holding rail, that the input element (106) comprises an input plate (51) or input rail, and that the body (102) is interposed between the holding plate (40) or holding rail on the one hand and between the input plate (51) or input rail on the other hand, and that the holding plate (40) or holding rail is fixed to the input plate (51) or input rail by means of the elastomeric body (102).

5. Soil cultivation device (10) according to any one of the preceding claims, **characterized in that**
the transmission mechanism (33) is connected to the input element (106) and the holding element (104) is fixed in such a way that the input element (106) and the holding element (104) twist relative to each other about a rotational axis (39) passing through the body (102), when the piercing tool articulation device (30) is pivoted about the second pivot axis (31).

6. Soil cultivation device (10) according to claim 5,
**characterized in that**
6.1 the rotational axis (39) runs parallel to at least one of the holding surfaces (46, 50) with at least one directional component and/or that
6.2 the body (102) is exposed with those of the remaining sides which extend parallel to the rotational axis (39) with at least one directional component, and is not laterally supported in these side regions.

7. Soil cultivation device (10) according to any one of the preceding claims, **characterized in that**
a7.1) the first side (44) is supported over its full surface on the holding element (104) and is connected over its full surface to the holding element (104) and/or
a7.2 the second side (48) is supported over its full surface on the input element (106) and is connected over its full surface to the input element (106)
and/or
a7.3 at least one or both of said holding surfaces (46, 50) is/are connected over its/their full surface to the associated side (44, 48) of the body (102).

8. Soil cultivation device (10) according to any one of the preceding claims, **characterized in that**
8.1 the holding element (104) is fixed in a stationary manner with respect to the device chassis or device frame (20) and/or
8.2 the body (102) is cuboid.

9. Soil cultivation device (10) according to any one of the preceding claims, **characterized in that** several piercing tool articulation devices (30) are provided, which are connected to respectively associated input elements (106) of a common damper device (38) by means of associated transmission devices (33), wherein the damper device (38) comprises a common holding element (104) and one or more common elastomeric bodies (102) through which said one or more input elements (106) are connected to the common holding element (104).

10. Soil cultivation device (10) according to any one of the preceding claims, **characterized in that** the transmission mechanism is a rod system (33) including a control rod (35) that is articulated with a first articulation point (36) to a piercing tool articulation device (30).

11. Soil cultivation device (10) according to claim 10,
**characterized in that** the rod system (33) further comprises a control lever (38) that is articulated at a second articulation point (37) to the control rod (35) and to the input element (106) or acts as an input element (106).

12. Soil cultivation device (10) according to claim 11,
**characterized in that**
12.1 the control lever (38) is elastically movably fixed to the device frame (20) or device chassis by means of the elastomeric body (102) and/or
12.2 the holding element (104) is a control lever base (110) fixed to the device frame (20) or device chassis, said control lever base being elastically movably fixed to the control lever (38) through said elastomeric body (102) and/or being fixed for elastic rotation about a rotational axis (39) passing through the elastomeric body (102).

13. Soil cultivation device (10) according to one of the claims 11 or 12, **characterized in that**
13.1 the control lever (38) has a first arm (52) that is fixedly connected to the input element (106) for a common movement therewith or constitutes said input element (106) and/or
13.2 the control lever (38) is rotatable about the rotational axis (39) passing inside the body (102), under deformation of said body (102) and/or
13.3 the control lever (38) rests against a stopper (56) while the piercing tool (32) is not inserted into the soil and/or
13.4 the control lever (38) has a second arm (53) that rests against the stopper (56) while the piercing tool (32) is not inserted into the soil and/or
13.5 the stopper (56) is adjustable and/or
13.6 the stopper (56) acts as a biasing device or forms part of the biasing device (60).

14. Soil cultivation device (10) according to any one of the preceding claims, **characterized in that**
14.1 a row of supporting arms (25) is provided, each thereof being associated to at least one piercing tool articulation device (30) and to at least one control rod (35), wherein several or all of said control rods (35) are adjustable in a centralized manner for setting the insertion angle and/or
14.2 the at least one control rod is rigid during operation and/or
14.3 the at least one control rod (35) comprises a length adjustment device (62) by means of which the length of the control rod (35) can be adjusted and fixed during non-operation, for setting an insertion angle.

## Revendications

1. Appareil de traitement du sol (10) mobile par rapport au sol dans une direction de déplacement et destiné à permettre d'ameublir des sols en profondeur comprenant :
un châssis d'appareil ou cadre d'appareil (20),
au moins un bras support (25) qui est articulé par une première zone sur le châssis ou le cadre d'appareil (20) autour d'un premier axe de pivotement (26) solidaire du châssis ou du cadre d'appareil (20) de façon à pouvoir pivoter vers le haut ou vers le bas,
un dispositif d'entraînement (27) pour permettre d'entraîner le déplacement vers le haut et vers le bas du bras-support (25),
au moins un dispositif d'articulation d'un outil perceur (30) par bras support (25) au moyen duquel au moins un outil perceur (32) peut être articulé sur une seconde zone du bras support (25) associé de manière à pouvoir pivoter autour d'un second axe de pivotement (31) par rapport à ce bras support (25) de sorte que, en présence d'un déplacement vers le bas du bras support (25) l'outil perceur (32) puisse être enfoncé dans le sol (22), et que au moins lorsque l'outil perceur (32) est enfoncé et que l'appareil de traitement du sol (10) poursuit son déplacement dans la direction de déplacement (23) le dispositif d'articulation de l'outil perceur (30) soit déplacé par pivotement par rapport au bras support (23) et au sol (22) de sorte que le sol (22) puisse être ameubli au-dessous de sa surface, et, au moins une transmission (33) qui est montée entre le dispositif d'articulation de l'outil perceur (20) et un dispositif d'amortissement (38) pour amortir au moins partiellement le mouvement relatif entre le dispositif d'articulation de l'outil perceur (30) et le bras support (25) associé,
le dispositif d'amortissement (38) comprenant un corps (102) en matériau élastomère qui est inséré entre un élément de retenue (104) permettant la fixation du dispositif d'amortissement (38) et un élément d'entrée (106) branché sur la transmission (33) de sorte que l'élément de retenue (104) et l'élément d'entrée (106) puissent être déplacés pour obtenir un amortissement, lors de l'engagement d'un mouvement par la transmission (33) en déformant le corps élastomère (102),
**caractérisé en ce que**
a) un premier côté (44) du corps élastomère (102) est relié solidairement à l'élément de retenue (104) en s'appliquant sur une surface de retenue (46) de cet élément de retenue (104), et, le second côté (48) du corps élastomère (102) situé à l'opposé du premier côté (44) et relié solidairement à l'élément d'entrée (106) en s'appliquant sur une surface de retenue (50) de l'élément d'entrée (106), et/ou
b) le corps (102) en matériau élastomère est élastiquement précontraint au moyen d'un dispositif de précontrainte (60) séparé agissant contre le corps.

2. Appareil de traitement du sol (10) conforme à la revendication 1, **caractérisé en ce que**
a1) le corps élastomère (102) est constitué par un bloc massif (42) du matériau élastomère (54) et/ou
a2) une première zone de surface du corps élastomère (102) située du premier côté (44) de ce corps élastomère (102) est reliée solidairement à une surface de retenue (46) de l'élément de retenue (104) en étant fixe et non mobile par rapport à l'élément de retenue (104), et une seconde zone de surface du corps élastomère (102) située sur le second côté (48) du corps élastomère (102) opposé au premier côté (44) est relié solidairement à une surface de retenue (50) de l'élément d'entrée (106) en étant fixe et non mobile par rapport à l'élément d'entrée (106).

3. Appareil de traitement du sol (10) conforme à l'une des revendications précédentes,
**caractérisé en ce que**
la surface du premier côté (44) est fixée par adhérence en s'appliquant sur la surface de retenue de l'élément de retenue (104) et la surface du second côté (48) est fixée par adhérence en s'appliquant sur la surface de retenue de l'élément d'entrée (106).

4. Appareil de traitement du sol (10) conforme à l'une des revendications précédentes,
**caractérisé en ce que**
l'élément de retenue (104) comporte une plaque de retenue (40) ou un rail de retenue,
l'élément d'entrée (106) comporte une plaque d'entrée (51) ou un rail d'entrée et le corps (102) est inséré entre la plaque de retenue (40) ou le rail de retenue d'une part et entre la plaque d'entrée (51) ou le rail d'entrée d'autre part, et la plaque de retenue (40) ou le rail de retenue est fixé au moyen du corps élastomère (102) sur la plaque d'entrée (51) ou le rail d'entrée.

5. Appareil de traitement du sol (10) conforme à l'une des revendications précédentes,
**caractérisé en ce que**
la transmission (33) est branchée sur l'élément d'entrée (106) et l'élément de retenue (104) est fixé de sorte que lors du pivotement du dispositif d'articulation de l'outil perceur (30) autour du second axe de pivotement (31), l'élément d'entrée (106) et l'élément de retenue (104) soient soumis à une torsion l'un par rapport à l'autre autour d'un axe de rotation (39) s'étendant au travers du corps (102).

6. Appareil de traitement du sol (10) conforme à la revendication 5, **caractérisé en ce que**
6.1 l'axe de rotation (39) s'étend au moins par une composante de direction parallèlement à au moins l'une des surfaces de retenue (46, 50), et/ou
6.2 le corps (102) est dégagé par les autres côtés restants qui s'étendent au moins par une composante de direction parallèlement à l'axe de rotation (39) et ne s'appuie pas latéralement dans ces zones latérales.

7. Appareil de traitement du sol (10) conforme à l'une des revendications précédentes,
**caractérisé en ce que**
a7.1) le premier côté (44) s'applique par toute sa surface sur l'élément de retenue (104) et est relié par toute sa surface avec l'élément de retenue (104), et/ou
a7.2) le second côté (48) s'applique par toute sa surface sur l'élément d'entrée (106) et est relié par toute sa surface avec l'élément d'entrée (106), et/ou
a7.3) au moins l'une des deux surfaces de retenue (46, 50) est reliée par toute sa surface avec le côté associé (44, 48) du corps (102).

8. Appareil de traitement du sol (10) conforme à l'une des revendications précédentes,
**caractérisé en ce que**
8.1 l'élément de retenue (104) est fixé solidairement sur le châssis de l'appareil ou le cadre de l'appareil (20) et/ou
8.2 le corps (102) est en forme de parallélépipède.

9. Appareil de traitement du sol (10) conforme à l'une des revendications précédentes,
**caractérisé en ce qu'**
il est prévu plusieurs dispositifs d'articulation d'un outil perceur (30) qui sont connectés au moyen de transmissions (33) associées sur un élément d'entrée respectivement associé (106) d'un dispositif d'amortissement (38) commun, le dispositif d'amortissement (38) comprenant un élément de retenue (104) commun et au moins un corps élastomère (102) commun par l'intermédiaire duquel les éléments d'entrée (106) sont reliés à l'élément de retenue (104) commun.

10. Appareil de traitement du sol (10) conforme à l'une des revendications précédentes,
**caractérisé en ce que**
la transmission est constituée par une tringlerie (33) équipée d'une tige de commande (35) qui est articulée sur le dispositif d'articulation d'un outil perceur (30) au niveau d'un premier point d'articulation (36).

11. Appareil de traitement du sol (10) conforme à la revendication 10, **caractérisé en ce que**
la tringlerie (33) comporte en outre un levier de commande (38) qui est articulé sur la tige de commande (35) au niveau d'un second point d'articulation (37) et est connecté à l'élément d'entrée (106) ou agit en tant qu'élément d'entrée (106).

12. Appareil de traitement du sol (10) conforme à la revendication 11, **caractérisé en ce que** :
12.1 le levier de commande (38) est fixé en étant mobile élastiquement sur le cadre d'appareil (20) ou le châssis d'appareil au moyen du corps élastomère (102), et/ou
12.2 l'élément de retenue (104) est la base du levier de commande (110) fixée sur le cadre d'appareil (20) ou le châssis d'appareil qui est fixée en pouvant être déplacée élastiquement sur le levier de commande (38) par l'intermédiaire du corps élastomère (102), ou est fixée élastiquement de manière à pouvoir se déplacer en rotation autour d'un axe de rotation (39) s'étendant au travers du corps élastomère (102).

13. Appareil de traitement du sol (10) conforme à l'une des revendications 11 et 12,
**caractérisé en ce que** :
13.1 le levier de commande (38) comporte un premier bras (52) qui est relié solidairement à l'élément d'entrée (106) pour permettre un déplacement commun ou forme l'élément d'entrée (106), et/ou 13.2 le levier de commande (38) est mobile en rotation autour de l'axe de rotation (39) s'étendant à la partie interne du corps (102) avec déformation de ce corps (102), et/ou
13.3 le levier de commande (38) s'applique contre une butée (56) lorsque l'outil perceur (32) n'est pas enfoncé et/ou
13.4 le levier de commande (38) comporte un second bras (53) qui s'applique contre la butée (56) lorsque l'outil perceur (32) n'est pas en-foncé, et/ou
13.5 la butée (56) est réglable, et/ou
13.6 la butée (56) fait office de dispositif de précontrainte ou de partie du dispositif de précontrainte (60).

14. Appareil de traitement du sol (10) conforme à l'une des revendications précédentes,
**caractérisé en ce que** :
14.1 il est prévu une rangée de bras support (25) ayant chacun un dispositif d'articulation (30) d'un outil perceur associé et au moins une tige de commande (35), plusieurs ou toutes les tiges de commande (35) pouvant être réglées de manière centralisée pour permettre de régler l'angle de pénétration, et/ou
14.2 la tige de commande (35) est rigide en fonctionnement et/ou
14.3 la tige de commande (35) comprend un dispositif de réglage de longueur (62) permettant de régler et de fixer sa longueur en cas de non utilisation pour régler l'angle de pénétration.
